# DEMANDE DE BREVET EUROPEEN

(11) **EP 0 818 334 A1**
(43) Date de publication de la demande: **14.01.1998**
(21) Numéro de dépôt: 97111337.8
(22) Date de dépôt: 04.07.1997
(51) Int. Cl.: B60H 1/00

(54) **Boîtier simplifié pour dispositif de chauffage ou de climatisation de véhicule**

(30) Priorité: 09.07.1996 FR 9608551
(71) Demandeur: VALEO CLIMATISATION, 78321 La Verrière (FR)
(72) Inventeur: Raccouard, Michel, 78310 Maurepas (FR)
(74) Mandataire: Gamonal, Didier

(57) **Abrégé**

Le boîtier du dispositif est composé de quatre éléments, à savoir un corps (1), un boîtier complémentaire supérieur (2), un couvercle inférieur (3) et un couvercle d'extrémité (4), chacun de ces trois derniers éléments s'assemblant directement sur le corps (1).

Ce boîtier est économique à fabriquer et à assembler.

## Description

L'invention concerne un boîtier pour dispositif de chauffage ou de climatisation de véhicule, comprenant plusieurs éléments qui s'assemblent entre eux pour délimiter des parties successives d'une chaîne de traitement d'air, à savoir une première partie d'aspiration d'air comprenant un filtre à air et un groupe motoventilateur à turbine centrifuge et axe vertical, et communiquant avec l'extérieur du boîtier par une ouverture d'admission d'air, une seconde partie intermédiaire comprenant le cas échéant une source de froid pour la climatisation, et une troisième partie de chauffage et de distribution d'air comprenant une source de chaleur et des organes mobiles destinés à régler des flux d'air vers différentes ouvertures de sortie d'air du boîtier.

Les éléments à assembler pour réaliser un tel boîtier sont habituellement au nombre de huit, à savoir deux éléments pour loger le filtre, deux éléments pour loger le groupe motoventilateur, deux éléments pour loger la partie intermédiaire du dispositif et deux éléments pour loger la partie de chauffage et de distribution.

Le but de l'invention est de réduire le nombre d'éléments à assembler, et par suite de réduire le coût de fabrication du boîtier et de montage du dispositif de chauffage ou de climatisation.

L'invention vise notamment un boîtier du genre défini en introduction, et prévoit que lesdites parties sont sensiblement alignées dans une direction longitudinale horizontale et que lesdits éléments sont au nombre de quatre, à savoir:
a) un corps formant les deux parois latérales opposées, la paroi supérieure, une portion de la paroi inférieure et une première paroi d'extrémité, adjacente à ladite première partie, d'un boîtier principal allongé dans ladite direction longitudinale, logeant ladite turbine, pour laquelle il définit une volute et présente une ouverture axiale d'alimentation en air ménagée dans ladite paroi supérieure, et lesdites seconde et troisième partie;
b) un boîtier complémentaire logeant le filtre et définissant ladite ouverture d'admission, se fixant sur le dessus du corps de façon à communiquer avec le boîtier principal par ladite ouverture d'alimentation;
c) un premier couvercle formant la portion restante de la paroi inférieure du boîtier principal, délimitant vers le bas lesdites première et seconde parties et logeant en partie le moteur du groupe motoventilateur, se fixant sur le dessous du corps; et
d) un second couvercle formant la seconde paroi d'extrémité du boîtier principal, se fixant sur l'extrémité correspondante du corps.

Des caractéristiques optionnelles de l'invention, complémentaires ou alternatives, sont énoncées ci-après:
- Chacun desdits éléments est une pièce unique moulée en matière plastique.
- Le boîtier complémentaire et les premier et second couvercle sont propres à être mis en place sur le corps respectivement par des mouvements verticaux vers le bas et vers le haut et par un mouvement dans la direction longitudinale.
- Le boîtier complémentaire présente une ouverture latérale permettant l'extraction du filtre.
- Le boîtier complémentaire comporte une paroi tubulaire verticale entourant le filtre, ouverte vers le bas pour permettre l'introduction d'un support pour le filtre avant le montage du boîtier complémentaire sur le corps.
- Le premier couvercle présente un enfoncement vers le bas, au voisinage de la turbine, définissant un logement, balayé par le courant d'air produit par celle-ci, pour un composant électrique dégageant de la chaleur et servant à régler la vitesse de la turbine.

L'invention a également pour objet un dispositif de chauffage ou de climatisation de véhicule, comportant une chaîne de traitement d'air composée d'une première partie d'aspiration d'air comprenant un filtre à air et un groupe motoventilateur à turbine centrifuge, d'une seconde partie intermédiaire et d'une troisième partie de chauffage et de distribution d'air comprenant une source de chaleur et des organes mobiles de réglage de flux d'air, ce dispositif étant logé dans un boîtier tel que défini ci-dessus.

Dans le cas d'un dispositif de climatisation, la partie intermédiaire comprend avantageusement une source de froid.

Les caractéristiques et avantages de l'invention seront exposés plus en détail dans la description ci-après, en se référant aux dessins annexés, sur lesquels:
- la figure 1 est une vue schématique en coupe longitudinale d'un dispositif de climatisation selon l'invention;
- la figure 2 est une vue schématique en coupe selon la ligne II-II de la figure 1;
- la figure 3 est une vue en coupe longitudinale d'un dispositif de chauffage selon l'invention, limitée à la région dans laquelle ce dispositif diffère de celui de la figure 1;
- la figure 4 est une vue partielle en coupe d'une zone de jonction de deux éléments du boîtier d'un dispositif selon l'invention; et
- les figures 5 à 7 illustrent schématiquement des phases successives du montage du dispositif de la figure 1.

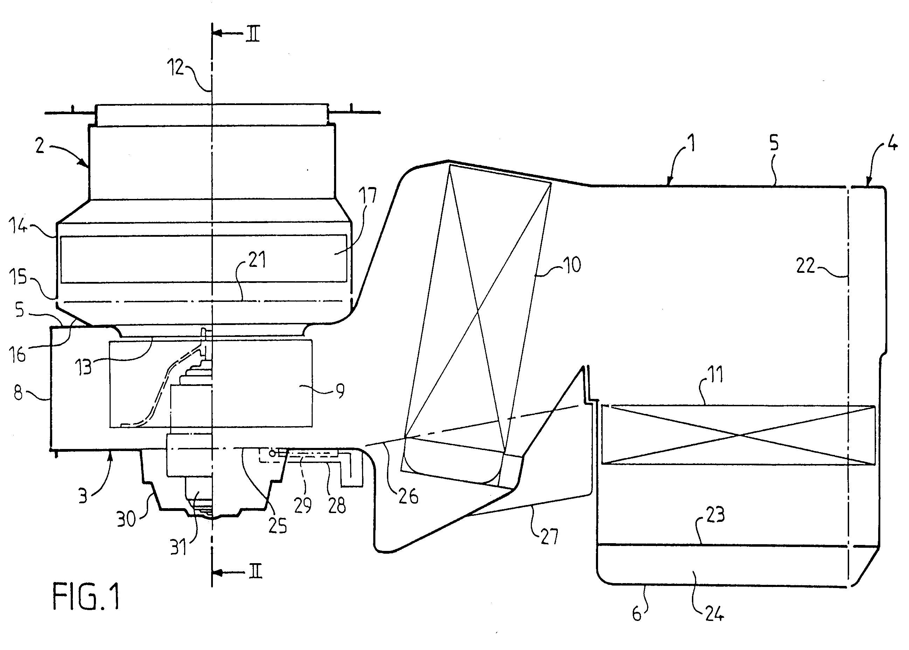

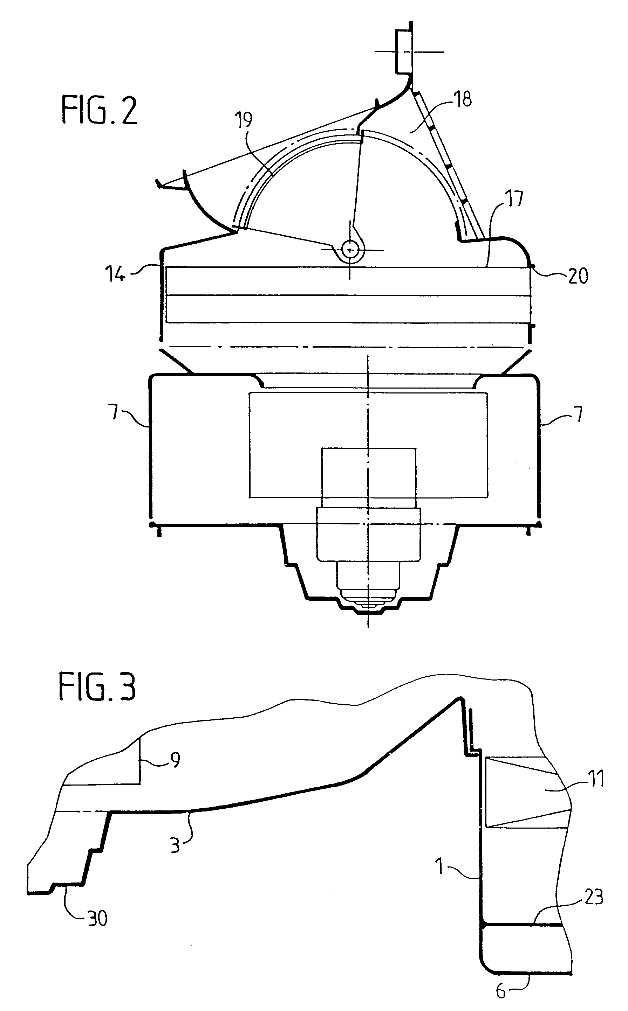

Le dispositif de climatisation illustré aux figures 1 et 2 est logé dans un boîtier formé de quatre éléments assemblés entre eux, à savoir un corps 1, un boîtier complémentaire 2, un couvercle inférieur 3 et un couvercle d'extrémité 4, chacun des éléments 2, 3 et 4 étant fixé directement sur le corps 1. Pour une lecture plus facile du dessin, les parois des éléments de boîtier sont représentées aux figures 1 à 3 par des traits épais, artificiellement écartés les uns des autres dans les zones de jonction des différents éléments.

Le corps 1 forme la paroi supérieure 5, une partie 6 de la paroi inférieure, les parois latérales 7 et la paroi d'extrémité gauche 8, comme vu sur la figure 1, d'un boîtier principal qui contient, sensiblement alignés de la gauche vers la droite, une turbine de pulseur d'air 9, un évaporateur 10 et un radiateur de chauffage 11. La turbine 9 présente un axe vertical 12, autour duquel est ménagée, dans la paroi supérieure 5 du corps 1, une ouverture 13 d'alimentation en air pour le pulseur. Par ailleurs, les parois latérales 7 et la paroi d'extrémité 8 forment autour de la turbine 9 une volute canalisant en direction de l'évaporateur 10 l'air projeté radialement par celle-ci. Le corps 1 est ouvert à son extrémité droite et vers le bas, au-dessous de la turbine 9 et de l'évaporateur 10, la portion de paroi inférieure 6 étant disposée au-dessous du radiateur 11.

Le boîtier principal est complété par le couvercle inférieur 3, qui forme la portion restante de sa paroi inférieure, et par le couvercle d'extrémité 4, qui forme sa paroi d'extrémité droite. Enfin, le boîtier complémentaire 2 est fixé au-dessus de la paroi supérieure 5 du corps 1, dans sa région entourant l'ouverture 13, de façon à communiquer par celle-ci avec le boîtier principal. Le boitier complémentaire 2 présente une paroi tubulaire verticale 14 ouverte à son extrémité inférieure, dont le bord annulaire inférieur 15 se raccorde bord à bord à une nervure annulaire 16 du corps 1, formée en saillie sur la paroi supérieure 5. La paroi tubulaire 14 loge un filtre à air 17. Au-dessus du filtre 17, la paroi du boîtier 2 comporte une ouverture 18 d'admission d'air dans le dispositif, commandée par un volet pivotant 19 du type tambour également logé dans le boîtier complémentaire au-dessus du filtre 17. Une ouverture latérale 20 pour l'échange du filtre pendant l'utilisation du dispositif est prévue dans la paroi tubulaire 14, tandis qu'un support non représenté pour ce filtre peut-être introduit par l'extrémité inférieure ouverte du boîtier 2, avant son assemblage sur le corps 1.

De même que les parois du corps 1 et du boîtier complémentaire 2 se raccordent mutuellement bord à bord dans un plan horizontal 21, celles du corps 1 et du couvercle 4 se raccordent bord à bord dans un plan vertical 22, les traces de ces plans étant représentées par des lignes en trait mixte. Outre les parois extérieures du boîtier, le corps 1 et le couvercle 4 définissent une cloison intermédiaire 23 qui délimite un conduit 24 de distribution de l'air ayant traversé le radiateur 11.

Le couvercle inférieur 3 se raccorde au corps 1 selon une surface gauche, dont la trace est également représentée en trait mixte, comprenant une région plane et horizontale 25, au-dessous de la turbine 9, et une région plane et inclinée 26, au niveau de l'évaporateur 10. La paroi du couvercle 3 présente localement deux enfoncements vers le bas, toutes deux disposées en arrière du plan de la figure 1. L'enfoncement 27, situé à l'extrémité droite du couvercle 3, délimite un espace destiné à recueillir les condensats formés sur l'évaporateur 10, tandis que l'enfoncement 28, disposé au voisinage de la turbine 9, délimite un logement pour une résistance 29 servant do façon connue au réglage de la vitesse de la turbine 9, le flux d'air produit par celle-ci permettant le refroidissement de la résistance. Un autre enfoncement vers le bas de la paroi du couvercle 3, repéré 30, de révolution autour de l'axe 12, délimite un espace où est logé partiellement le moteur électrique 31 d'entraînement de la turbine 9, celui-ci s'étendant en outre vers le haut à l'intérieur du corps 1.

Dans la partie droite du boîtier principal sont logés, outre le radiateur 11, des volets pivotants qui peuvent être commandés, de façon connue, pour régler le débit et la température des flux d'air à envoyer dans différentes régions de l'habitacle du véhicule.

La figure 3 montre partiellement, selon le même plan de coupe que la figure 1, passant par l'axe 12, un dispositif de chauffage dont les composants sont pour la plupart identiques à ceux du dispositif de climatisation décrit ci-dessus. Comme il ne s'agit plus d'un dispositif de climatisation, l'évaporateur 10 est supprimé et la partie de la chaîne de traitement d'air comprise entre la partie gauche, contenant le groupe motoventilateur 9, 31, et la partie droite contenant le radiateur 11 est une simple partie de transition. La paroi du couvercle inférieur 3 est modifiée de façon à canaliser l'air de façon appropriée dans cette partie intermédiaire compte tenu de l'absence de l'évaporateur. Par ailleurs, la résistance 29 et le logement correspondant du couvercle sont également supprimés. Bien entendu, il est possible de prévoir un dispositif avec évaporateur et sans résistance, ou inversement.

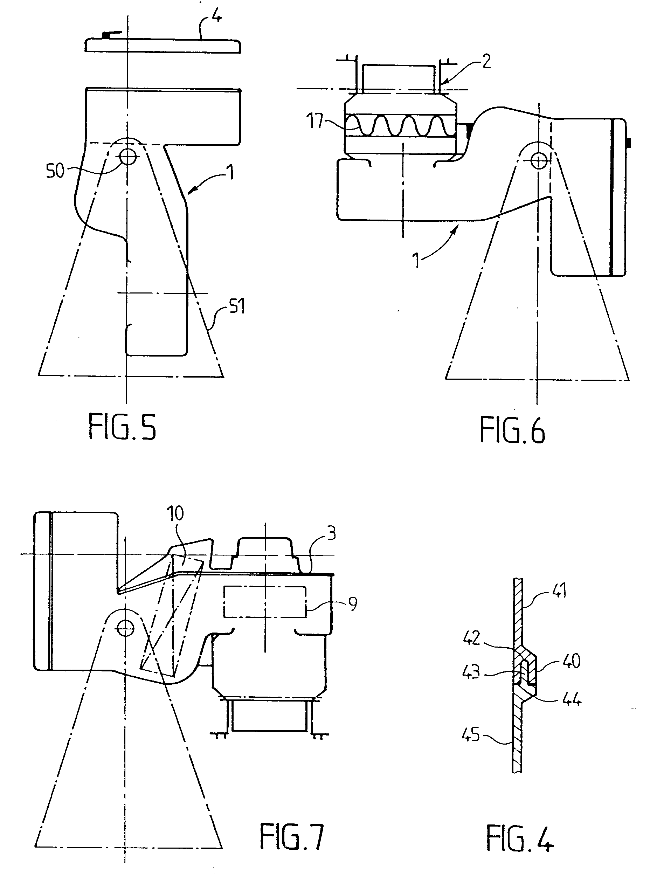

La figure 4 montre un exemple de profils coopérants pour la jonction bord à bord des parois de deux éléments du boîtier selon l'invention. Le bord 40 de l'une 41 des parois est épaissi et présente une gorge 42 dans laquelle pénètre une languette 43 faisant saillie à partir du bord 44 également épaissi de l'autre paroi 45.

Ce mode de coopération assure un positionnement relatif précis des différents éléments. Leur fixation mutuelle peut être assurée par tous moyens connus tels que collage, soudage, verrouillage mécanique, vissage.

La description ci-dessus se réfère à une orientation particulière du dispositif. Il est possible, sous certaines conditions, de faire fonctionner le dispositif dans des orientations différentes.

On va maintenant décrire, en se référant aux figures 5 à 7, une manière simple de monter le dispositif selon l'invention.

A la figure 5, le corps 1, non équipé, est immobilisé entre deux mâchoires 50 d'un support approprié 51, comme dans un étau, de manière que son extrémité ouverte soit tournée vers le haut. On introduit alors dans le corps 1, par cette extrémité ouverte, le radiateur 11 et les volets de la partie de chauffage et de distribution. On met ensuite en place le couvercle 4 par un mouvement vertical de haut en bas, puis on monte la cinématique associée aux volets. Un pivotement d'un quart de tour amène le corps dans la position indiquée à la figure 6, qui est aussi celle de la figure 1. On met alors en place, par un mouvement vertical vers le bas, le boîtier complémentaire 2 équipé du filtre 17 et du volet d'admission 19. Après un nouveau pivotement de 180°, on arrive à la position de la figure 7, qui permet d'introduire par le haut l'évaporateur 10, puis de mettre en place, toujours par un mouvement vertical de haut en bas, le couvercle 3 équipé du groupe motoventilateur 9, 31.

## Revendications

1. Boîtier pour dispositif de chauffage ou de climatisation de véhicule, comprenant plusieurs éléments qui s'assemblent entre eux pour délimiter des parties successives d'une chaîne de traitement d'air, à savoir une première partie d'aspiration d'air comprenant un filtre à air (17) et un groupe motoventilateur (9, 31) à turbine centrifuge (9) et axe vertical, et communiquant avec l'extérieur du boîtier par une ouverture (18) d'admission d'air, une seconde partie intermédiaire comprenant le cas échéant une source de froid (10) pour la climatisation, et une troisième partie de chauffage et de distribution d'air comprenant une source de chaleur (11) et des organes mobiles destinés à régler des flux d'air vers différentes ouvertures de sortie d'air du boîtier, caractérisé en ce que lesdites parties sont sensiblement alignées dans une direction longitudinale horizontale et que lesdits éléments sont au nombre de quatre, à savoir:
a) un corps (1) formant les deux parois latérales opposées (7), la paroi supérieure (5), une portion (6) de la paroi inférieure et une première paroi d'extrémité (8), adjacente à ladite première partie, d'un boîtier principal (1, 3, 4) allongé dans ladite direction longitudinale, logeant ladite turbine, pour laquelle il définit une volute et présente une ouverture axiale (13) d'alimentation en air ménagée dans ladite paroi supérieure, et lesdites seconde et troisième partie;
b) un boîtier complémentaire (2) logeant le filtre et définissant ladite ouverture d'admission, se fixant sur le dessus du corps de façon à communiquer avec le boîtier principal par ladite ouverture d'alimentation;
c) un premier couvercle (3) formant la portion restante de la paroi inférieure du boîtier principal, délimitant vers le bas lesdites première et seconde parties et logeant en partie le moteur (31) du groupe motoventilateur, se fixant sur le dessous du corps; et
d) un second couvercle (4) formant la seconde paroi d'extrémité du boîtier principal, se fixant sur l'extrémité correspondante du corps.

2. Boîtier selon la revendication 1, caractérisé en ce que chacun desdits éléments (1-4) est une pièce unique moulée en matière plastique.

3. Boîtier selon l'une des revendications 1 et 2, caractérisé en ce que le boîtier complémentaire et les premier et second couvercle sont propres à être mis en place sur le corps respectivement par des mouvements verticaux vers le bas et vers le haut et par un mouvement dans la direction longitudinale.

4. Boîtier selon l'une des revendications précédentes, caractérisé en ce que le boîtier complémentaire présente une ouverture latérale (20) permettant l'extraction du filtre.

5. Boîtier selon l'une des revendications précédentes, caractérisé en ce que le boîtier complémentaire comporte une paroi tubulaire verticale (14) entourant le filtre, ouverte vers le bas pour permettre l'introduction d'un support pour le filtre avant le montage du boîtier complémentaire sur le corps.

6. Boîtier selon l'une des revendications précédentes, caractérisé en ce que le premier couvercle présente un enfoncement (28) vers le bas, au voisinage de la turbine, définissant un logement, balayé par le courant d'air produit par celle-ci, pour un composant électrique (29) dégageant de la chaleur et servant à régler la vitesse de la turbine.

7. Dispositif de chauffage ou de climatisation de véhicule, comportant une chaîne de traitement d'air composée d'une première partie d'aspiration d'air comprenant un filtre à air (17) et un groupe motoventilateur (9, 31) à turbine centrifuge (9), d'une seconde partie intermédiaire et d'une troisième partie de chauffage et de distribution d'air comprenant une source de chaleur (11) et des organes mobiles de réglage de flux d'air, caractérisé en ce qu'il est logé dans un boîtier (1-4) selon l'une des revendications précédentes.

8. Dispositif de climatisation selon la revendication 7, caractérisé en ce que ladite partie intermédiaire comprend une source de froid (10).
